# FASCICULE DE BREVET EUROPEEN

(11) **EP 1 522 772 B1**
(45) Date de publication et mention de la délivrance du brevet: **09.12.2009**
(21) Numéro de dépôt: 04292313.6
(22) Date de dépôt: 28.09.2004
(51) Int. Cl.: F16J 15/08

(54) **Turbomachine comprenant deux éléments mis en communication avec interposition d'un joint**
Turbomaschine mit zwei Bauteilen die durch eine Dichtung verbunden sind
Turbine containing two components connected by a sealing

(30) Priorité: 30.09.2003 FR 0311420
(43) Date de publication de la demande: 13.04.2005
(73) Titulaire: SNECMA, 75015 Paris (FR)
(72) Inventeur: Taillant, Jean-Claude, 77000 Vaux-le-Penil (FR); Marchi, Marc, 77350 Le Mee (FR)
(74) Mandataire: Barbin le Bourhis, Joël

(56) Documents cités:
- EP-A- 0 787 890
- EP-A- 1 002 972
- US-A- 3 690 785
- US-A- 5 797 723
- US-B1- 6 318 728
- US-B1- 6 464 232

## Description

L'invention concerne une turbomachine, typiquement une turbine et a plus particulièrement pour objet un perfectionnement visant à améliorer l'étanchéité périphérique de la jonction entre deux éléments statiques de celle-ci, susceptibles de déplacements relatifs importants (axiaux, radiaux, tangentiels). Par exemple, l'invention s'applique particulièrement à la jonction entre une couronne de secteurs d'aubes (distributeurs de turbine, par exemple) et un carter adjacent.

Dans une turbomachine du type défini ci-dessus, l'étanchéité de la jonction entre les deux éléments précités peut être assurée par un diaphragme annulaire en acier, monté dans un élément et appliqué contre l'autre. Un exemple de ce type de montage est décrit dans le document GB 2 035 474. Le document EP 1 156 188 décrit un joint disposé entre deux éléments adjacents et comportant une lame plate montée dans un logement du premier élément et appliquée élastiquement sur une surface courbe du second élément, de sorte que la ligne de contact entre le joint et le deuxième élément est courbe. L'invention a pour but de proposer un joint plus performant, de prix de revient plus faible et offrant une grande facilité de montage et de maintenance.

Plus particulièrement, l'invention concerne une turbomachine comprenant deux éléments longitudinalement adjacents mis en communication avec interposition d'un joint installé entre eux, **caractérisée en ce que** ledit joint est constitué d'une pluralité de segments flexibles agencés en couronne, en ce que chaque segment est monté dans un logement défini dans l'un des éléments, en ce qu'il comporte une lame plate présentant une zone de déformation rectiligne et une zone d'appui étanche rectiligne portant sur une surface plane et lisse de l'autre élément.

Typiquement, l'élément comportant ladite surface lisse, cité ci-dessus, est un carter tandis que l'élément portant lesdits segments est une couronne de secteurs d'aubes.

Préférentiellement, chaque segment comporte plusieurs lamelles plus fines, accolées les unes contre les autres et formant une lame plate précitée. A titre d'exemple, la lame plate (l'ensemble des lamelles) est montée dans un insert à profil en U et à ouverture rectiligne. La zone de pliage mentionnée ci-dessus est définie à l'extérieur de cet insert au voisinage de son ouverture rectiligne. Ce montage garantit une zone de pliage elle-même rectiligne et parallèle au bord de la lame plate précitée qui porte contre la surface plane et lisse de l'autre élément.

Avantageusement, l'insert est encastré dans un logement correspondant de l'élément qui porte ledit segment.

L'invention sera mieux comprise et d'autres avantages de celle-ci apparaîtront mieux à la lumière de la description qui va suivre, donnée uniquement à titre d'exemple et faite en référence aux dessins annexés dans lesquels :
- la figure 1 est une vue partielle en coupe d'une turbomachine équipée du perfectionnement selon l'invention ;
- la figure 2 est une vue de détail suivant la flèche II de la figure 1 ;
- la figure 3 est une vue de l'un des segments ; et
- la figure 4 est une vue selon la flèche IV de la figure 3.

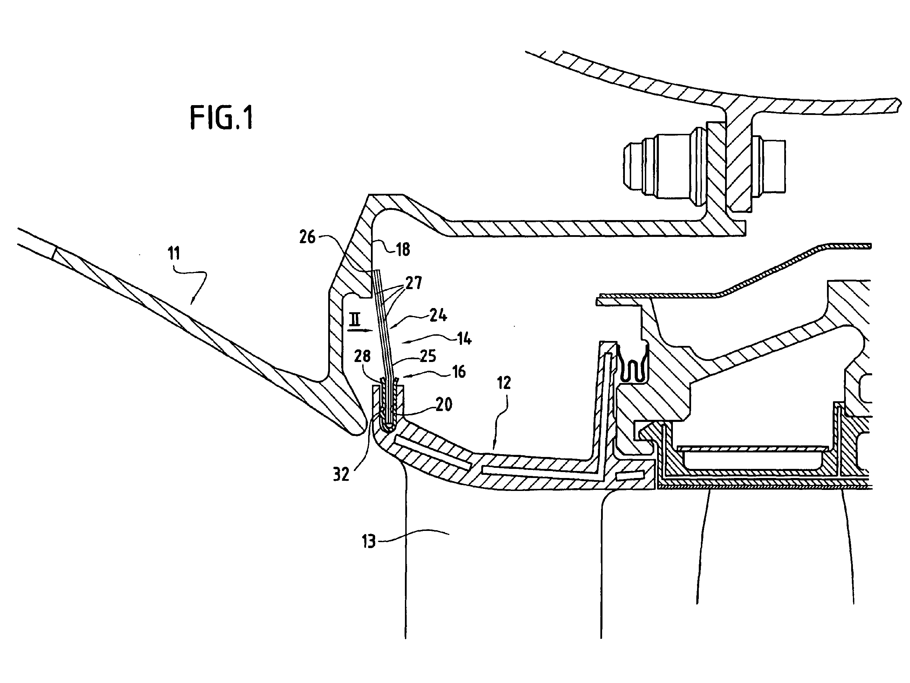

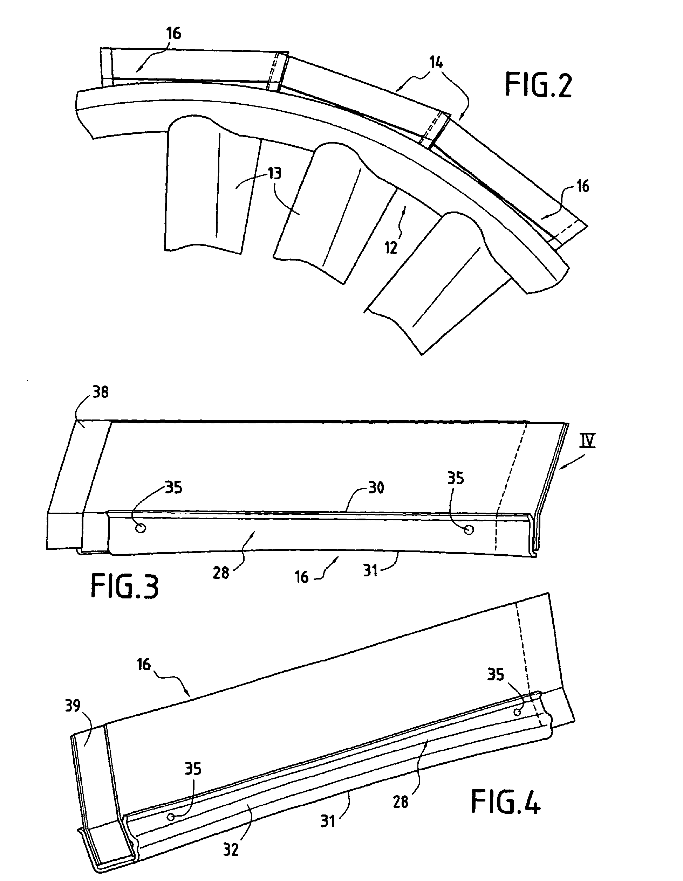

Sur la figure 1, on a représenté partiellement une turbine et notamment deux éléments de celle-ci : un carter 11 et une couronne de secteurs d'aubes 12 pour orienter les gaz vers la roue de turbine. Les aubes proprement dites portent la référence 13. Ces deux éléments, adjacents longitudinalement, sont fixes mais des déplacements relatifs (axiaux, radiaux, tangentiels) peuvent intervenir entre eux. Un joint périphérique 14, globalement annulaire est installé entre les deux éléments pour assurer l'étanchéité vis-à-vis de l'extérieur. L'invention porte principalement sur la structure de ce joint et son montage entre les deux éléments. Ce joint et les particules qui le compose sont représentés sur les figures 2 à 4.

Le joint 14 est constitué d'une pluralité de segments 16, flexibles, globalement rectilignes, agencés en couronne. Les segments sont portés par l'un des éléments, en l'occurrence la couronne de secteurs d'aubes 12 et prennent appui sur une surface plane et lisse 18, rectifiée et polie (dite "glace") du carter. Plus particulièrement, chaque segment 16 est monté dans un logement 20 correspondant défini à la périphérie extérieure de la couronne de secteurs d'aubes 12. Un tel segment comporte une lame plate 24, élastique, présentant une zone de déformation rectiligne 25 définie au voisinage du bord du logement 20 et une zone d'appui étanche 26, également rectiligne, portant sur la surface plane et lisse 18. Ici, la zone d'appui se confond sensiblement avec le bord droit de la lame plate 24, parallèle à la zone de pliage 25. De plus, avantageusement, chaque lame plate 24 est constituée de plusieurs lamelles 27 relativement minces, accolées les unes aux autres, ce qui améliore la flexibilité de ladite lame. Dans l'exemple, lesdites lamelles sont au nombre de 3 ; elles sont en acier.

Comme on peut le voir sur la figure 1, dans l'exemple représenté, la surface 18 est radiale et fait face à l'espace périphérique défini à l'extérieur de la couronne de secteurs d'aubes 12. La pression qui règne dans cette zone, plus élevée que celle qui règne dans l'espace annulaire s'étendant de l'autre côté du joint, engendre sur ledit joint un effort qui augmente l'appui des lames sur la surface 18 et par conséquent son efficacité.

Chaque segment comporte un insert 28 à profil en U présentant une ouverture rectiligne 30 et dans lequel est montée ladite lame 24 (c'est-à-dire en fait les trois lamelles 27 accolées). C'est donc l'ouverture rectiligne de cet insert qui crée une zone de pliage 25 elle-même rectiligne. L'insert a approximativement la forme du logement 20 dans lequel il vient s'encastrer. En particulier, le fond 31 de cet insert est courbe pour coïncider avec le fond également courbe du logement 20. La couronne de secteurs d'aubes 12 comporte autant de logements 20 qu'il y a de segments pour constituer le joint 14. L'insert comporte un bossage longitudinal 32 sur l'une de ses faces, s'étendant parallèlement au fond courbe 31, ce qui assure son montage sous contrainte dans ledit logement. Les lamelles engagées dans l'insert sont solidarisées à celui-ci par des pions de retenue 35. L'encastrement à force du segment dans le logement provoque le resserrement des faces de l'insert 28, ce qui assure l'étanchéité au niveau de la couronne de secteurs d'aubes. Le bossage 32 assure le montage sous contrainte de l'insert dans le logement.

Par ailleurs, chaque lame comporte des zones de recouvrement amincies 38, 39 à ses extrémités. Ces zones de recouvrement amincies sont définies par des décalages longitudinaux entre les lamelles 27. Les lamelles sont conformées, plus exactement légèrement pliées au voisinage de l'ouverture rectiligne de l'insert. Elles sont précontraintes au montage, en appui contre ladite surface lisse 18.

Le comportement du joint en cas de déplacement relatif entre les deux éléments, résulte avec évidence de la description qui précède. Le fait d'imposer une zone de déformation rectiligne facilite la flexion et limite les contraintes. De même, la conception du joint sous forme de segments facilite le montage et la maintenance, lesdits segments pouvant être montés et remplacés par simple emboîtement à force. Le joint est dimensionné en fonction des déplacements relatifs prévisibles et de la pression à contenir. Le système s'adapte parfaitement aux déplacements et désalignements des alignements entre les deux éléments en raison de la souplesse importante des lames composées de plusieurs lamelles superposées. La flexion des lames est bien maîtrisée en raison des zones de déformation et d'appui rectilignes et parallèles. Le montage des lamelles en précontrainte assure l'étanchéité à tous les régimes. Aucun couvre-joint indépendant n'est nécessaire.

## Revendications

1. Turbomachine comprenant deux éléments longitudinalement (11, 12) adjacents mis en communication avec interposition d'un joint installé entre eux, où ledit joint (14) est constitué d'une pluralité de segments flexibles (16) agencés en couronne, chaque segment étant monté dans un logement défini dans l'un des éléments, le dit joint (14) comportant une lame plate (24) **caractérisée en ce que** cette lame, présente une zone de déformation rectiligne (25) et une zone d'appui étanche (26) rectiligne portant sur une surface plane et lisse de l'autre élément.

2. Turbomachine selon la revendication 1, **caractérisé en ce que** l'élément comportant ladite surface lisse (18) est un carter (11) et l'élément portant lesdits segments est une couronne de secteurs d'aubes (12).

3. Turbomachine selon l'une quelconque des revendications précédentes, **caractérisée en ce que** chaque segment comporte plusieurs lamelles (27) accolées formant une lame plate (24) précitée.

4. Turbomachine selon l'une quelconque des revendications précédentes, **caractérisée en ce que** chaque segment comporte un insert (28) à profil en U présentant une ouverture rectiligne (30) et dans lequel est montée ladite lame, ladite zone de pliage étant définie à l'extérieur de cet insert, au voisinage de son ouverture rectiligne.

5. Turbomachine selon la revendication 4, **caractérisée en ce que** ledit insert (28) est encastré dans un logement (20) correspondant de l'élément qui porte ledit segment.

6. Turbomachine selon la revendication 5, **caractérisée en ce que** ledit insert comporte un bossage (32) assurant son montage sous contrainte dans ledit logement.

7. Turbomachine selon l'une quelconque des revendications précédentes, **caractérisée en ce que** ladite lame comporte des zones de recouvrement amincies (38, 39) à ses extrémités.

8. Turbomachine selon l'ensemble des revendications 3 et 7, **caractérisée en ce que** lesdites zones de recouvrement amincies sont définies par des décalages longitudinaux entre des lamelles (27) accolées précitées.

9. Turbomachine selon l'une des revendications précédentes, **caractérisée en ce que** chaque lame (24) précitée est conformée pour être précontrainte au montage, en appui contre ladite surface lisse.

10. Turbomachine selon l'une des revendications 2 à 9, **caractérisée en ce que** la surface lisse (18) est choisie de façon que l'appui desdites lames soit augmenté par l'action de la pression régnant du côté de la couronne de secteurs d'aubes.

## Claims

1. A turboshaft engine comprising two longitudinally adjacent elements (11, 12) connected to each other with the interposition of a seal installed between them, wherein said seal (14) consists of a plurality of flexible segments (16) arranged in a ring, each segment being mounted in a housing defined in one of the elements, said seal (14) comprising a flat blade (24), **characterized in that** said blade has a straight deformation zone (25) and a straight fluid-tight bearing zone (26) bearing onto a flat and smooth surface of the other component.

2. The turboshaft engine as claimed in claim 1, wherein the element comprising the said smooth surface (18) is a casing (11) and the element carrying the said segments is a ring of sectors of vanes (12).

3. The turboshaft engine as claimed in any one of the preceding claims, wherein each segment comprises several joined-together laminas (27) forming a said flat blade (24).

4. The turboshaft engine as claimed in any one of the preceding claims, wherein each segment comprises an insert (28) with a U-shaped profile and a straight opening (30) in which the said blade is mounted, the said bending zone being defined outside of this insert in the vicinity of its straight opening.

5. The turboshaft engine as claimed in claim 4, wherein the said insert (28) is housed in a corresponding housing (20) of the element which carries the said segment.

6. The turboshaft engine as claimed in claim 5, wherein the said insert comprises a protrusion (32) which ensures its force-fitting in the said housing.

7. The turboshaft engine as claimed in any one of the preceding claims, wherein the said blade comprises thinned overlap zones (38, 39) at its ends.

8. The turboshaft engine as claimed in claim 3, wherein the said blade comprises thinned overlap zones (38, 39) at its ends and wherein the said thinned overlap zones are defined by longitudinal offsets between the said joined-together laminas (27).

9. The turboshaft engine as claimed in one of the preceding claims, wherein each said lamina (24) is shaped such that it is pre-stressed on assembly, bearing against the said smooth surface.

10. The turboshaft engine as claimed in one of claims 2 to 9, wherein the smooth surface (18) is chosen such that the bearing force of the said blades is increased by the action of the pressure existing on the side facing the ring of sectors of vanes.

## Patentansprüche

1. Turbomaschine mit zwei benachbarten Längselementen (11, 12), die unter Einfügen einer zwischen ihnen angebrachten Dichtung miteinander verbunden sind, wobei die Dichtung (14) von einer Vielzahl von kranzförmig angeordneten flexiblen Segmenten (16) gebildet ist, wobei jedes Segment in einer Aufnahme angebracht ist, die in einem der Elemente definiert ist, wobei die Dichtung (14) eine flache Zunge (24) umfaßt, **dadurch gekennzeichnet, daß** diese Zunge einen geradlinigen Verformungsbereich (25) sowie einen geradlinigen dichten Auflagebereich (26) aufweist, der auf einer ebenen und glatten Fläche des anderen Elements aufliegt.

2. Turbomaschine nach Anspruch 1, **dadurch gekennzeichnet, daß** das die glatte Fläche (18) aufweisende Element ein Gehäuse (11) und das die Segmente tragende Element ein Schaufelsektorenkranz (12) ist.

3. Turbomaschine nach einem der vorhergehenden Ansprüche, **dadurch gekennzeichnet, daß** jedes Segment mehrere aneinanderliegende Lamellen (27) umfaßt, die eine vorgenannte flache Zunge (24) bilden.

4. Turbomaschine nach einem der vorhergehenden Ansprüche, **dadurch gekennzeichnet, daß** jedes Segment einen Einsatz (28) mit U-förmigem Profil umfaßt, der eine geradlinige Öffnung (30) aufweist und in dem die Zunge angebracht ist, wobei der Biegebereich außerhalb dieses Einsatzes in der Nähe seiner geradlinigen Öffnung definiert ist.

5. Turbomaschine nach Anspruch 4, **dadurch gekennzeichnet, daß** der Einsatz (28) in eine entsprechende Aufnahme (20) des Elements, das das Segment trägt, eingelassen ist.

6. Turbomaschine nach Anspruch 5, **dadurch gekennzeichnet, daß** der Einsatz einen Buckel (32) aufweist, der dessen Anbringen unter Spannung in der Aufnahme sicherstellt.

7. Turbomaschine nach einem der vorhergehenden Ansprüche, **dadurch gekennzeichnet, daß** die Zunge an ihren Enden verdünnte Abdeckbereiche (38, 39) aufweist.

8. Turbomaschine nach den Ansprüchen 3 und 7, **dadurch gekennzeichnet, daß** die verdünnten Abdeckbereiche durch Längsverschiebungen zwischen den vorgenannten aneinanderliegenden Lamellen (27) definiert sind.

9. Turbomaschine nach einem der vorhergehenden Ansprüche, **dadurch gekennzeichnet, daß** jede vorgenannte Zunge (24) geformt ist, um bei der Montage in Anlage an der glatten Fläche vorgespannt zu sein.

10. Turbomaschine nach einem der Ansprüche 2 bis 9, **dadurch gekennzeichnet, daß** die glatte Fläche (18) derart gewählt ist, daß die Anlage der Zungen durch die Wirkung des Druckes, der auf der Seite des Schaufelsektorenkranzes herrscht, verstärkt wird.
